# FASCICULE DE BREVET EUROPEEN

(11) **EP 1 075 935 B1**
(45) Date de publication et mention de la délivrance du brevet: **12.05.2004**
(21) Numéro de dépôt: 00420159.6
(22) Date de dépôt: 18.07.2000
(51) Int. Cl.: B32B 15/01, B23K 35/28, C22C 21/16, B23K 1/00

(54) **Bande ou tube en alliage d'aluminium pour la fabrication d'échangeurs de chaleur brasés**
Band oder Rohr aus Aluminiumlegierung zur Hestellung eines hartgelöteten Wärmeaustauscher
Strip or tube for the fabrication of brazed heat exchangers

(30) Priorité: 12.08.1999 FR 9910536
(43) Date de publication de la demande: 14.02.2001
(60) Demande divisionnaire: 03022659.1
(73) Titulaire: Pechiney Rhenalu, 75116 Paris (FR)
(72) Inventeur: Kucza, Jean-Claude, 38960 Saint Etienne de Crossey (FR); Shahani, Ravi, 38500 Coublevie (FR); Morere, Bruce, 38500 Voiron (FR); Hoffmann, Jean-Luc, 67150 Matzenheim (FR)
(74) Mandataire: Mougeot, Jean-Claude

(56) Documents cités:
- EP-A- 0 326 337
- EP-A- 0 718 072
- EP-A- 1 059 362
- WO-A-94/22633
- US-A- 4 649 087
- US-A- 5 125 452
- US-A- 5 422 191
- PATENT ABSTRACTS OF JAPAN vol. 1998, no. 02, 30 janvier 1998 (1998-01-30) -& JP 09 268339 A (FURUKAWA ELECTRIC CO LTD:THE), 14 octobre 1997 (1997-10-14)

## Description

### Domaine de l'invention

L'invention concerne les bandes ou tubes filés minces (d'épaisseur généralement comprise entre 0,1 et 1,5 mm) en alliage aluminium-manganèse (série 3000 selon la nomenclature de l'Aluminum Association), éventuellement plaqués sur une ou deux faces d'un alliage de couverture, le plus souvent un alliage de brasage aluminium-silicium (série 4000 selon la nomenclature de l'Aluminum Association). Ces bandes et tubes sont destinés à la fabrication d'éléments, tels que tubes, ailettes, collecteurs et plaques, d'échangeurs de chaleur assemblés par brasage fort, ces échangeurs entrant notamment dans les systèmes de refroidissement des moteurs et de climatisation des habitacles d'automobiles. Les techniques de brasage des alliages d'aluminium sont décrites par exemple dans l'article de J.C. Kucza, A. Uhry et J.C. Goussain " Le brasage fort de l'aluminium et ses alliages ", paru dans Soudage et Techniques Connexes, nov.-déc. 1991, pp. 18-29. Les bandes ou tubes selon l'invention sont utilisés notamment dans les techniques de brasage avec flux non corrosif du type NOCOLOK ® ou CAB (controlled atmosphere brazing).

### Etat de la technique

L'utilisation des alliages d'aluminium dans les échangeurs thermiques des véhicules automobiles s'est développée au cours des dernières années, notamment en raison du gain de poids qu'elle procure par rapport à celle des alliages cuivreux. Les propriétés requises pour les bandes ou tubes en alliage d'aluminium utilisés pour la fabrication d'échangeurs brasés sont notamment une bonne aptitude au brasage, une résistance mécanique élevée après brasage, de manière à utiliser des épaisseurs aussi faibles que possible, une formabilité suffisante pour une mise en forme aisée des tubes, ailettes collecteurs et plaques, et une bonne résistance à la corrosion. Bien entendu, il importe que l'alliage choisi soit aisé à couler et à laminer ou filer, et que le coût d'élaboration des bandes ou tubes soit compatible avec les exigences de l'industrie automobile.

L'alliage couramment utilisé comme alliage de base est le 3003 de composition (% en poids selon la norme EN 573-3):
Si < 0,6 Fe < 0,7 Cu ; 0,05 - 0,20 Mn : 1,0 - 1,5 Zn < 0,10 autres éléments < 0,05 chacun et < 0,15 au total, balance aluminium. De nombreux alliages ont été proposés au cours des dernières années pour améliorer l'une ou l'autre des propriétés d'emploi mentionnées précédemment, plus particulièrement la résistance à la corrosion, d'où l'appellation d'alliages " long-life " qui leur est parfois donnée dans la profession.

Le brevet FR 2564962 (= US 4,673,551) de Sumitomo Light Metal Industries concerne un alliage de base pour ailettes d'échangeurs à haute pression, de composition (% en poids):
Si : 0,05 - 0,30 Fe < 0,8 Cu : 0,1 - 1 Mn : 0,6 - 1,5 Mg : 0,1 - 0,75 et éventuellement Zr, Ti, Cr ou V à des teneurs < 0,25%

Le brevet US 5,125,452 (Sumitomo Light Metal Industries et Nippondenso) décrit des bandes plaquées dont l'alliage de base a pour composition :
Si < 0,1 Fe < 0,3 Cu : 0,05 - 0,35 Mn : 0,3 - 1,5 Mg : 0,05 - 0,5 Ti : 0,05 - 0,35 avec Cu - 0,2 < Mg < Cu + 0,2. Un exemple comparatif n° 17 décrit la composition : Si = 0,19 Fe = 0,24 Cu = 0,23 Mn = 1,2 Mg = 0,20.

Le brevet EP 0326337 (Alcan International) décrit une bande plaquée dont l'alliage de base a pour composition :
Si < 0,15 Fe < 0,4 Cu : 0,1 - 0,6 Mn : 0,7 -1,5 Mg < 0,8

La faible teneur en Si, de préférence < 0,05%, permet la formation d'une couche dense de précipités au Mn, qui joue le rôle de barrière à la diffusion du silicium de l'alliage de revêtement, et augmente la résistance à la corrosion. WO 94/22633 est une variante du précédent qui ne diffère que par une teneur en Cu plus élevée (0,6 - 0,9%). Un exemple comparatif décrit la composition : Si = 0,21 Fe = 0,17 Cu = 0,30 Mn = 1,09 Mg = 0,30.

Le brevet US 5,350,436 (Kobe Alcoa et Nippondenso) décrit un alliage de base de composition: Si: 0,3 -1,3 Cu < 0,2 Mn : 0,3 -1,5 Mg < 0,2 Ti : 0,02 - 0,3 Fe non mentionné.

La teneur élevée en Si (0,8% dans les exemples) permet de compenser l'absence de Cu et Mg pour la résistance mécanique. La présence de Ti et l'absence de Mg contribuent à la bonne résistance à la corrosion.

Le brevet EP 0718072 (Hoogovens Aluminium Walzprodukte) décrit un alliage de base de composition : Si > 0,15 Fe < 0,8 Cu : 0,2 - 2 Mn : 0,7 - 1,5 Mg : 0,1 - 0,6 avec Cu + Mg > 0,7 et addition possible de Ti, Cr, Zr ou V. Les exemples montrent des teneurs en Si de 0,5%.

La demande de brevet EP 1059362 (Corus Aluminium Walzprodukte), publié postérieurement à la date de priorité de la présente demande, décrit un alliage de filage de composition : Si : 0,15 - 1,0 Fe < 0,8 Cu : 0,2 - 2,0 Mn : 1,0 - 1,4 Mg : 0,1 - 0,6.

Si on veut résumer l'enseignement de l'état de la technique pour ce type d'alliage, on constate qu'une première catégorie d'alliages présente une teneur très faible en Si (< 0,15 et de préférence < 0,05%) accompagnée ou non d'une teneur en Fe faible, mais dans tous les cas moins exigeante que pour Si. Ces teneurs très faibles en Si ne peuvent s'obtenir qu'en partant de bases pures, ce qui grève les coûts de fabrication. Une deuxième catégorie d'alliages, en remettant en cause la nécessité d'une teneur très faible en Si pour obtenir une bonne résistance à la corrosion, présente au contraire une teneur plutôt élevée en Si (0,5 à 0,8%), éventuellement pour compenser la perte de résistance mécanique liée à de faibles teneurs en éléments durcissants Mg et Cu. En effet, pour le brasage avec flux, il est connu que la teneur en Mg doit être réduite, pour empêcher la migration de Mg à la surface de la couche de placage, qui conduit à la formation d'une couche épaisse d'oxyde MgO. La présence de cet oxyde oblige à augmenter la quantité de flux sur les surfaces à braser, ce qui augmente le coût de l'assemblage et détériore l'aspect de surface. Quant à Cu, son influence sur la résistance à la corrosion est controversée.

### Objet de l'invention

La demanderesse a déterminé un domaine de composition permettant d'améliorer encore le compromis entre les diverses propriétés d'emploi (résistance mécanique, ductilité, résistance à la corrosion et brasabilité) tout en restant dans des conditions économiques acceptables, en associant un domaine étroit de teneur en Si situé entre celles divulguées dans les deux catégories d'alliages de l'art antérieur, et une teneur réduite en Fe, mais restant néanmoins à un niveau raisonnable ne nécessitant pas de base pure.

L'invention a ainsi pour objet une bande ou un tube filé mince, destiné à la fabrication d'échangeurs thermiques brasés, en alliage de composition (% en poids): Si : 0,15 - 0,30 Fe < 0,25 Cu : 0,4 - 0,7 Mn : 1,0 - 1,4 Mg < 0,01 Zn < 0,2 Ti < 0,1 autres éléments < 0,05 chacun et < 0,15 au total, reste aluminium, avec : Fe ≤ Si.

Cette bande ou ce tube peuvent être plaqués sur une ou deux faces d'un alliage d'aluminium, le plus souvent un alliage de brasage AlSi contenant de 5 à 13% de Si.

### Description des figures

La figure 1 représente les valeurs de R_{0,2} et Rₘ à l'état recuit pour les 5 alliages des exemples.
La figure 2 représente les résultats du test SWAAT pour ces alliages à l'état H24.
La figure 3 représente la définition de la largeur du joint brasé dans le test d'aptitude au brasage décrit dans les exemples.
La figure 4 représente schématiquement une coupe micrographique de la bande brasée montrant les paramètres servant à déterminer la profondeur de dissolution dans le test de brasage.
La figure 5 représente les résultats de largeur du joint brasé.
La figure 6 représente les résultats de profondeur de dissolution intergranulaire.

### Description de l'invention

Les bandes ou tubes selon l'invention ont une épaisseur généralement comprise entre 0,1 et 1,5 mm en fonction du type de pièce fabriquée, et peuvent être plaqués d'un alliage de couverture, qui peut être soit un alliage de brasage, soit un alliage jouant le rôle d'anode sacrificielle pour protéger la pièce de la corrosion tel qu'un alliage au zinc comme l'alliage 7072.

Les limites de composition de l'alliage de base peuvent se justifier de la manière suivante. Une teneur minimale en silicium de 0,15% permet d'éviter d'utiliser une base pure, dont le coût est élevé. Au delà de 0,30%, le silicium peut avoir une influence défavorable sur la résistance à la corrosion, et également sur la formabilité, à cause de la formation de dispersoïdes au manganèse AlMnSi et AlMnFeSi.

Une teneur en fer limitée à moins de 0,25% est également favorable à la résistance à la corrosion et à la formabilité, mais il n'est pas nécessaire de descendre à des teneurs très faibles < 0,15% qui conduiraient à des prix de revient élevés. On doit cependant garder la teneur en fer égale ou inférieure à la teneur en silicium.

Le cuivre est un élément durcissant qui contribue à la résistance mécanique, mais au-delà de 1,1%, il se forme des composés intermétalliques grossiers à la coulée qui nuisent à l'homogénéité du métal et constituent des sites d'initiation de la corrosion.

En ce qui concerne le rôle du cuivre sur la résistance à la corrosion, les travaux les plus récents montrent plutôt une influence favorable, du moins tant que le cuivre reste en solution solide (cf. R ; Benedictus et al. " Influence of alloying additions on corrosion behaviour of aluminium brazing sheet ", ICAA-6, 1998, pp. 1577-1582).

Le manganèse est dans des limites voisines de celles de l'alliage 3003 ; il contribue à la résistance mécanique et à la résistance à la corrosion, en augmentant la différence de potentiel électrochimique entre l'alliage de base et la couche de placage. Comme pour tous les alliages AlMn, il n'est guère possible d'aller au-delà de 1,4%, car l'alliage ne se coule plus facilement.

Le magnésium est néfaste à la brasabilité, dans la mesure où il migre à la surface du placage et, lorsqu'il ne s'agit pas d'un brasage sous vide, il vient former une couche d'oxyde qui modifie dans un sens défavorable les propriétés de la brasure. Pour cette raison, sa teneur doit être limitée à 0,01%. On doit alors avoir au moins 0,4% de cuivre pour compenser la perte de résistance mécanique.

Une addition limitée de zinc peut avoir un effet bénéfique sur la résistance à la corrosion, en modifiant les mécanismes électrochimiques, notamment pour les alliages les plus chargés en cuivre. Elle doit rester cependant en dessous de 0,2% pour éviter une trop forte susceptibilité à la corrosion généralisée.

Le titane, à une teneur inférieure à 0,1%, est connu pour avoir une influence favorable sur la résistance à la corrosion.

Pour les bandes ou tubes plaqués d'un alliage de brasage, celui-ci doit avoir une température de liquidus suffisamment basse par rapport à l'alliage de base pour disposer d'un intervalle de température suffisant pour le brasage, une résistance mécanique acceptable et une bonne mouillabilité. On utilise généralement des alliages AlSi contenant entre 5 et 13% de silicium, par exemple les alliages 4004, 4104, 4045, 4047, 4343 ou 4843. Ces alliages peuvent contenir des éléments d'addition, par exemple du strontium. On peut également utiliser comme placage, sur l'une des faces, un alliage d'aluminium à effet d'anode sacrificielle, notamment un alliage contenant du zinc, tel que l'alliage 7072. Il est aussi possible d'utiliser des placages multicouches. L'épaisseur de la couche plaquée peut varier entre 0,01 et 0,2 mm et représente le plus souvent environ 10% de l'épaisseur totale..

Le procédé de fabrication des bandes comporte la coulée d'une plaque de l'alliage de base et, le cas échéant, d'une ou deux plaques de l'alliage de couverture, selon qu'on vise un plaqué une ou deux faces. L'ensemble est laminé à chaud, puis à froid jusqu'à l'épaisseur désirée. Lorsqu'elle est destinée à des pièces avec une mise en forme importante, la bande peut être utilisée à l'état recuit (état O) en procédant à un recuit final à une température comprise entre 320 et 380°C, en continu pour les bandes les plus épaisses, ou en batch pour les bandes les plus minces. Ce recuit conduit à la recristallisation de l'alliage et une microstructure à grains fins. Dans les autres cas, elle est utilisée à l'état écroui, qui conduit à une meilleure résistance mécanique, par exemple un état H 14 ou H24 (selon la norme NF EN 515), ce dernier état étant obtenu par un recuit de restauration entre 250 et 300°C, évitant la recristallisation

Avant d'installer la matériau de placage, on peut procéder à une homogénéisation de la plaque d'alliage de base à une température comprise entre 590 et 630°C. Cette homogénéisation est favorable à la ductilité de la bande laminée et elle est toujours pratiquée lorsque la bande est utilisée à l'état O. Elle favorise la coalescence des dispersoïdes au Mn et induit ultérieurement une recristallisation à grains fins équiaxes, qui favorise la diffusion du silicium de l'alliage de brasage aux nombreux joints de grains. Cette diffusion du silicium peut être défavorable à la résistance à la corrosion des pièces brasées et entraîner, au cours du brasage, un appauvrissement en liquide d'apport nécessaire à la bonne formation des joints brasés. Par contre, en l'absence d'homogénéisation et avec une bande écrouie et restaurée, on obtient après brasage, pour les bandes selon l'invention, une microstructure à grains allongés, qui empêche la diffusion du silicium. Il est préférable, pour éviter la diffusion du silicium aux joints de grains, d'avoir des grains présentant un facteur de forme F = longueur maxi / largeur maxi supérieur à 2.

Le procédé de fabrication des tubes comporte la coulée d'une billette, l'homogénéisation de cette billette, le filage du tube et son étirage aux dimensions désirées. Le tube peut être utilisé brut d'étirage (état H18) ou recuit (état O).

Les bandes et tubes selon l'invention présentent, par rapport aux produits de l'art antérieur un compromis entre les diverses propriétés d'emploi plus favorable, sans ajouter de difficultés d'élaboration et de mise en oeuvre, ni d'augmentation du coût de fabrication.

Ces bandes et tubes peuvent être utilisés dans la fabrication des radiateurs, notamment d'automobiles, tels que les radiateurs de refroidissement du moteur, les radiateurs d'huile, les radiateurs de chauffage et les radiateurs d'air de suralimentation, ainsi que dans les systèmes de climatisation.

### Exemples

On a coulé 3 alliages A, B et C, ce dernier correspondant à un alliage de base de bande selon l'invention, ainsi qu'un alliage D selon l'art antérieur et un alliage 3003.

Les compositions des alliages sont indiquées au tableau 1 :

**Tableau 1**

| Alliage | Si | Fe | Cu | Mn | Mg | Ti |
|---|---|---|---|---|---|---|
| A | 0,20 | 0,19 | 0,36 | 1,36 | 0,23 | 0,01 |
| B | 0,19 | 0,18 | 0,80 | 1,35 | 0,13 | 0,01 |
| C | 0,18 | 0,18 | 0,60 | 1,30 | 6 ppm | 0,008 |
| D | 0,04 | 0,17 | 0,25 | 1,10 | 0,18 | 0,03 |
| 3003 | 0,23 | 0,62 | 0,08 | 1,13 | 59 ppm | |

Les 5 alliages ont été coulés en plaques, recouvertes 1 face d'alliage 4343, laminées à chaud sans homogénéisation préalable et laminées à froid à l'état H24 (selon la norme NF EN 515) jusqu'à l'épaisseur totale de 0,27 mm, avec un recuit de restauration à 270°C, l'alliage de brasage représentant environ 10% de l'épaisseur.

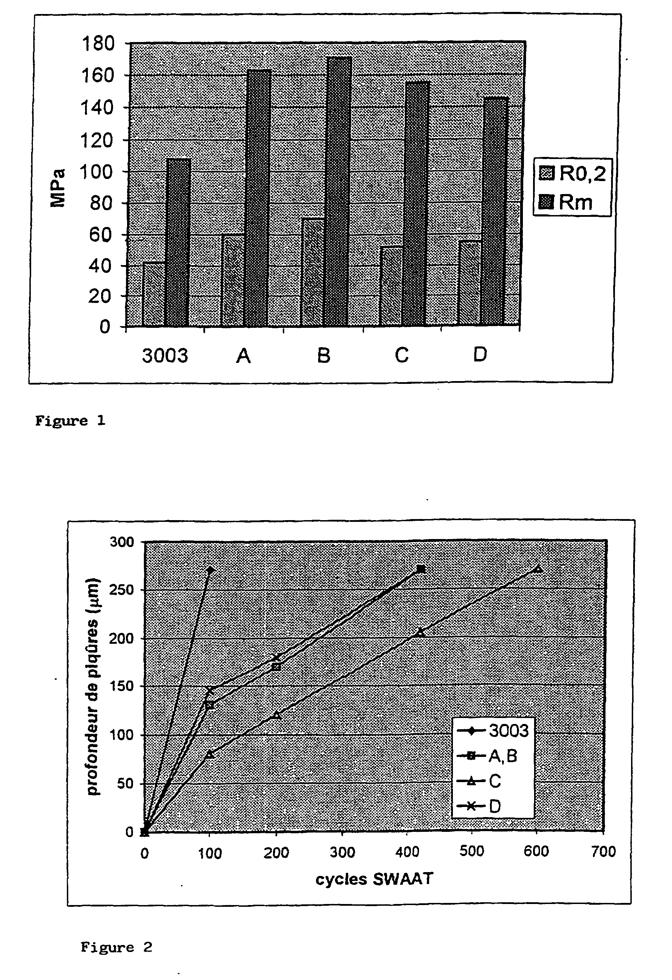

On mesure les caractéristiques mécaniques (résistance à la rupture Rm et limite élastique à 0,2% R_{0,2} en MPa) et la profondeur de piqûration (en µm) à l'aide du test SWAAT (salt water acetic acid test) selon la norme ASTM G85. Les résultats sont représentés aux figures 1 et 2.

L'aptitude au brasage est mesurée à l'aide de deux paramètres : la largeur du joint brasé (en µm) et la profondeur de dissolution (en µm), par un test de brasage, décrit ci-après, simulant le brasage tube-ailette d'un échangeur thermique d'automobile. L'aptitude au brasage est d'autant meilleure que la largeur du joint est plus grande, et que la profondeur de dissolution est plus faible.

On réalise une éprouvette " sandwich " constituée de 2 tôles plaquées, de format 60 x 25 mm enserrant une ailette nue ondulée à 10 ondulations. Les surfaces sont dégraissées par dégraissage thermique à 250°C pendant 15 mn. Les 3 pièces sont ensuite serrées entre elles avec une légère pression (0,1 à 0,2 MPa), et l'éprouvette assemblée est trempée dans une solution de flux à une concentration de 10 à 30% dans l'eau, puis placée dans un four de brasage à une température de 600°C pendant 5 mn.

Les observations se font au microscope optique à partir d'éprouvettes préalablement découpées dans la largeur, enrobées et finement polies.

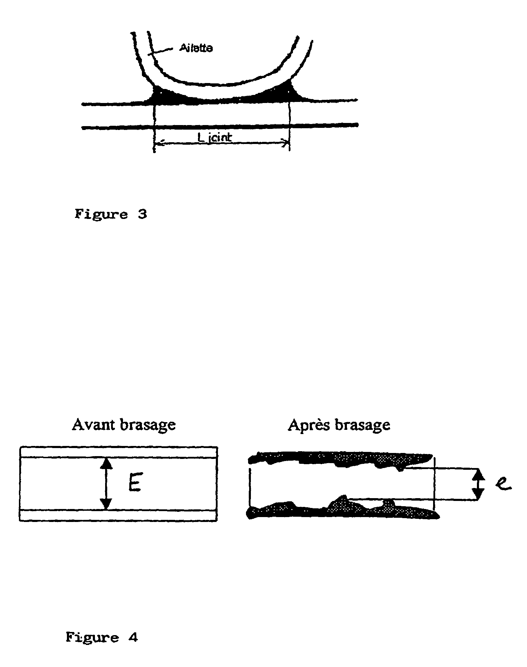

L'observation du rayon de raccordement de l'assemblage, tel que représenté à la figure 3, permet de mesurer la largeur du joint brasé.

La profondeur de dissolution est obtenue en mesurant, à un grossissement compris entre x 100 et x400, la dissolution intergranulaire selon la méthode suivante :
Après polissage micrographique, on effectue une attaque Keller pour mettre en évidence la microstructure (intermétalliques et joints de grains).Cette surface attaquée présente les particularités suivantes :
   a) une interface rectiligne entre la brasure et les précipités AlMnFeSi de l'alliage de base issus de la dissolution homogène de type transgranulaire du silicium dans cet alliage de base, particulièrement visible pour les alliages à grains grossiers,
   b) une interface tourmentée issue de la dissolution intergranulaire du silicium, mieux visible pour les alliages à grains fins. C'est cette dissolution qui est prise en compte pour la mesure.

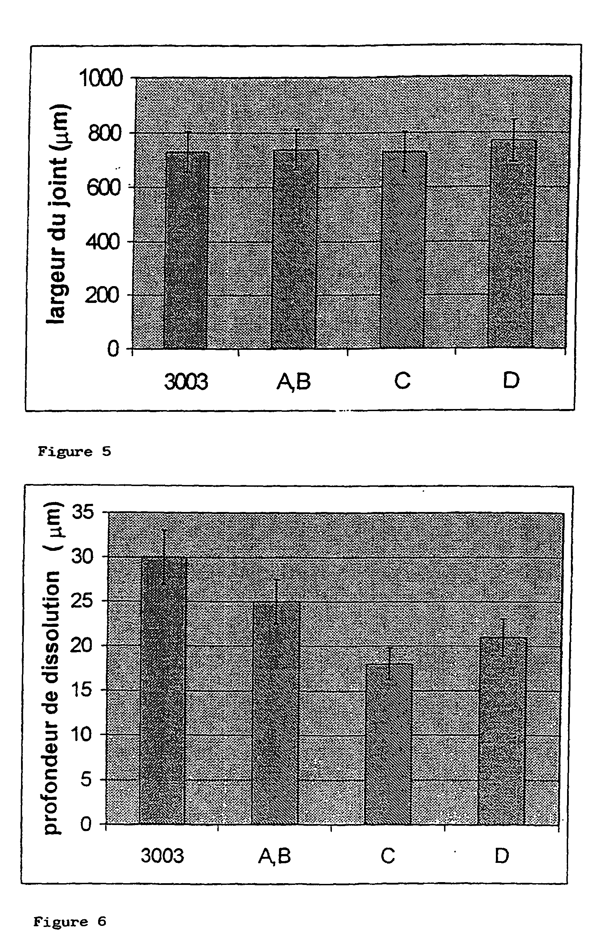

On mesure, comme représenté à la figure 4, l'épaisseur minimale e entre les interfaces tourmentées du métal d'apport, et on définit la profondeur de dissolution intergranulaire d par la différence E - e, dans laquelle E est l'épaisseur de l'alliage de base avant brasage. Pour exprimer la profondeur de dissolution pour une bande plaquée 1 face, la valeur d est divisée par 2, en considérant que le processus de dissolution est symétrique pour une bande plaquée 2 faces. Les valeurs indiquées sont la moyenne de 10 valeurs mesurées pour un échantillon. Les résultats relatifs à la largeur du joint et à la profondeur de dissolution intergranulaire sont représentés respectivement aux figures 5 et 6.

Par rapport à l'alliage 3003, les alliages A, B et C présentent des caractéristiques mécaniques améliorées, B étant le plus performant, une profondeur de piqûration plus faible, C selon l'invention étant le meilleur, une largeur de joint brasé à peu près similaire et une profondeur de dissolution plus basse, surtout pour C.

Par rapport à l'alliage D, Rₘ est toujours supérieur et R_{0,2} l'est pour A et B, C étant très légèrement inférieur. La profondeur de piqûration est la plus faible pour C. La largeur du joint brasé est pratiquement identique, et la profondeur de dissolution est plus réduite pour C, et légèrement supérieure pour A et B. L'alliage C selon l'invention présente ainsi une résistance à la corrosion améliorée. Enfin, l'alliage de l'invention ne nécessite pas, au contraire de D, une teneur très basse en silicium qui entraîne un coût de production plus élevé.

## Revendications

1. Bande ou tube filé, destiné à la fabrication d'échangeurs thermiques brasés, en alliage de composition (% en poids):
Si : 0,15 - 0,30 Fe < 0,25 Cu : 0,4 - 0,7 Mn : 1,0 -1,4 Mg < 0,01 Zn < 0,2 Ti < 0,1 autres éléments < 0,05 chacun et < 0,15 au total, reste aluminium, avec : Fe ≤ Si.

2. Bande selon la revendication 1, **caractérisée en ce qu'**elle est plaquée sur une ou deux faces d'un alliage d'aluminium de brasage, de préférence un alliage AlSi contenant de 5 à 13% de Si.

3. Bande selon l'une des revendications 1 ou 2, **caractérisée en ce qu'**après brasage, elle présente une microstructure à grains allongés avec un facteur de forme F > 2.

4. Bande selon l'une des revendications 1 ou 2, **caractérisée en ce qu'**après brasage, elle présente une microstructure à grains approximativement équiaxes.

5. Procédé de fabrication d'une bande selon la revendication 3 comportant la coulée d'une plaque, le laminage à chaud de cette plaque sans homogénéisation préalable, le laminage à froid à l'épaisseur désirée et un recuit de restauration à une température comprise entre 250 et 300°C.

6. Procédé de fabrication d'une bande selon la revendication 4 comportant la coulée d'une plaque, l'homogénéisation de cette plaque entre 590 et 630°C, le laminage à chaud de la plaque homogénéisée, le laminage à froid à l'épaisseur désirée et un recuit final à une température comprise entre 320 et 380°C.

## Claims

1. Strip or extruded tube designed for the manufacture of brazed heat exchangers, made from an alloy with composition (% by weight):
Si 0.15 - 0.30; Fe < 0.25; Cu 0.4 - 0.7; Mn 1.0 - 1.4; Mg < 0.01; Zn < 0.2; Ti < 0.1 other elements < 0.05 each and < 0.15 total, remainder aluminium with Fe ≤ Si.

2. Strip according to claim 1, **characterised in that** it is clad on one or both faces with an aluminium brazing alloy, preferably an AlSi alloy containing 5 to 13% of Si.

3. Strip according to one of claims 1 or 2, **characterised in that** its microstructure after brazing consists of elongated grains with shape factor F > 2.

4. Strip according to one of claims 1 or 2, **characterised in that** its microstructure after brazing consists of approximately equiaxial grains.

5. Process for manufacturing a strip according to claim 3 comprising casting of a plate, hot rolling of this plate without prior homogenisation, cold rolling to the required thickness and restoration annealing at a temperature of between 250 and 300°C.

6. Process for manufacturing a strip according to claim 4, comprising casting of a plate, homogenisation of this plate between 590 and 630°C, hot rolling of the homogenised plate, cold rolling to the required thickness and final annealing at a temperature of between 320 and 380°C.

## Patentansprüche

1. Band oder stranggepresstes Rohr zur Herstellung hartgelöteter Wärmeaustauscher aus einer Legierung mit der Zusammensetzung (Gew.-%):
Si: 0,15 - 0,30 Fe < 0,25 Cu: 0,4 - 0,7 Mn: 1,0 - 1,4 Mg < 0,01 Zn < 0,2 Ti < 0,1, weitere Elemente jeweils < 0,05 und insgesamt < 0,15, Rest Aluminium, mit F ≤ Si.

2. Band nach Anspruch 1, **dadurch gekennzeichnet, dass** es auf einer oder beiden Seiten mit einer Aluminium-Lötlegierung plattiert ist, vorzugsweise einer AlSi-Legierung mit 5 bis 13 % Si.

3. Band nach einem der Ansprüche 1 oder 2, **dadurch gekennzeichnet, dass** es nach erfolgtem Hartlöten ein Mikrogefüge mit länglichen Körnern mit einem Formfaktor F > 2 aufweist.

4. Band nach einem der Ansprüche 1 oder 2, **dadurch gekennzeichnet, dass** es nach erfolgtem Hartlöten ein Mikrogefüge mit annährend gleichachsigen Körnern aufweist.

5. Verfahren zur Herstellung eines Bandes nach Anspruch 3, umfassend das Gießen einer Platte, das Warmwalzen dieser Platte ohne Vorhomogenisierung, das Kaltwalzen auf die gewünschte Dicke und ein Erholungsglühen bei einer Temperatur zwischen 250 und 300°C.

6. Verfahren zur Herstellung eines Bandes nach Anspruch 4, umfassend das Gießen einer Platte, die Homogenisierung dieser Platte zwischen 590 und 630°C, das Warmwalzen der homogenisierten Platte, das Kaltwalzen auf die gewünschte Dicke und ein Endglühen bei einer Temperatur zwischen 320 und 380°C.
